# EUROPÄISCHE PATENTSCHRIFT

(11) **EP 1 048 499 B1**
(45) Veröffentlichungstag und Bekanntmachung des Hinweises auf die Patenterteilung: **17.07.2002**
(21) Anmeldenummer: 00102486.8
(22) Anmeldetag: 05.02.2000
(51) Int. Cl.: B60H 1/34, B60H 1/00

(54) **Lüfterklappe**
Ventilation louvre
Volet de ventilation

(30) Priorität: 30.04.1999 DE 19919633; 30.07.1999 DE 19935549
(43) Veröffentlichungstag der Anmeldung: 02.11.2000
(73) Patentinhaber: Siemens Aktiengesellschaft, 80333 München (DE)
(72) Erfinder: Müller, Holger, 63322 Rödermark (DE); Santarossa, Bruno, 63694 Limeshain (DE); Schäfer, Peter, 63303 Sprendlingen (DE); Sedlaczek, Erwin, 61449 Steinbach (DE)

(56) Entgegenhaltungen:
- DE-A- 19 739 932
- US-A- 4 339 991
- US-A- 4 653 386
- US-A- 5 338 251

## Beschreibung

Die Erfindung betrifft eine Lüfterklappe für ein Kraftfahrzeug, insbesondere für ein Cockpit eines Kraftfahrzeugs, welche mittels eines Handhebels verstellbar ausgebildet ist.

Lüfterklappen der vorstehenden Art sind in Klima-, Heizungs- und Lüftungseinrichtungen von Kraftfahrzeugen vorhanden und deshalb allgemein bekannt. Üblicherweise werden solche Lüfterklappen von Hand individuell eingestellt. Dabei ist nicht nur ein Verteilen des in das Kraftfahrzeug eintretenden Luftstromes auf den Fußraum, auf die mittlere Höhe im Kraftfahrzeug oder zur Defrostung auf die Windschutzscheibe möglich, vielmehr sind solche Lüfterklappen oftmals auch verstellbar, um zur Temperaturregelung den Anteil der frisch hinzuströmenden Luft oder der durch ein Kühlaggregat geführten Luft und der Umfuftmenge verändern zu können. In großen Fahrzeugen sind bei den im Beifahrerraum angeordneten Luftaustrittsklappen die zur Betätigung vorgesehenen Handhebel für den Fahrer während der Fahrt nicht erreichbar. Deshalb ist eine motorische Verstellung oder Regelung der Lüfterklappen wünschenswert. Da bei motorischen Verstellungen jedoch eine größere Gefahr eines Versagens besteht als bei einer manuellen Verstellung, wäre es vorteilhaft, wenn trotz der motorischen Verstellung noch eine manuelle Verstellung möglich ist. Dem steht jedoch entgegen, daß motorische Verstellungen meist selbsthemmend sind, so daß sie im nicht bestromten Zustand die jeweilige Lüfterklappe blockieren.

Gattungsgemäße Lüfterklappen sind aus DE-A-19739932 bekannt.

Der Erfindung liegt das Problem zugrunde, eine Lüfterklappe der eingangs genannten Art so zu gestalten, daß sie sowohl motorisch als auch manuell zu betätigen ist, ohne daß es durch eine manuelle Verstellung bei der automatischen Verstellung zu Schwierigkeiten kommt.

Dieses Problem wird durch die Merkmale des Anspruchs 1 gelöst.

Da der elektromotorische Antrieb über eine Rutschkupplung mit der Lüfterklappe verbunden ist, kann das Getriebe des elektromotorischen Antriebs selbsthemmend gestaltet werden. Bei Handbetätigung der Lüfterklappe verstellt sich diese relativ zu dem Antrieb. Die erfindungsgemäße Positionserkennung ermöglicht es jedoch der Regelung der Lüfterklappe, ihre durch die manuelle Verstellung geänderte Position zu erfassen und im Falle einer automatischen Regelung fehlerfrei einzugreifen.

Konstruktiv besonders einfach ist der Antrieb gestaltet, wenn er einen Getriebemotor hat, der getrieblich mit einer Schnecke verbunden ist, welche in ein auf einer Welle der Lüfterklappe angeordnetes Schneckenrad eingreift, und wenn das Schneckenrad durch die Rutschkupplung mit der Welle verbunden ist.

Das Positionserkennen kann mit allgemein bekannten Mitteln erfolgen. Man kann auf bewährte Bauteile zurückgreifen, wenn die Positionserkennung durch ein Potentiometer gebildet ist, in welches die Welle der Lüfterklappe führt. Alternativ kann man die Dauerhaltbarkeit verbessernd jedoch auch ein verschleißfreies Hallelement vorsehen.

Besonders vorteilhaft läßt sich die Erfindung anwenden, wenn die Lüfterklappe Teil einer Lüfterjalousie ist.

Konstruktiv besonders einfach ist die Lüfterklappe gestaltet, wenn gemäß einer anderen Weiterbildung der Erfindung der elektromotorische Antrieb an einer Einzelklappe vorgesehen ist und die Einzelklappen der Lüfterjalousie durch eine Koppelstange miteinander Verbindung haben.

Die Erfindung läßt verschiedene Ausführungsformen zu. Zur weiteren Verdeutlichung ihres Grundprinzips wird eine davon schematisch in Explosionsdarstellung gezeigt und nachfolgend beschrieben.

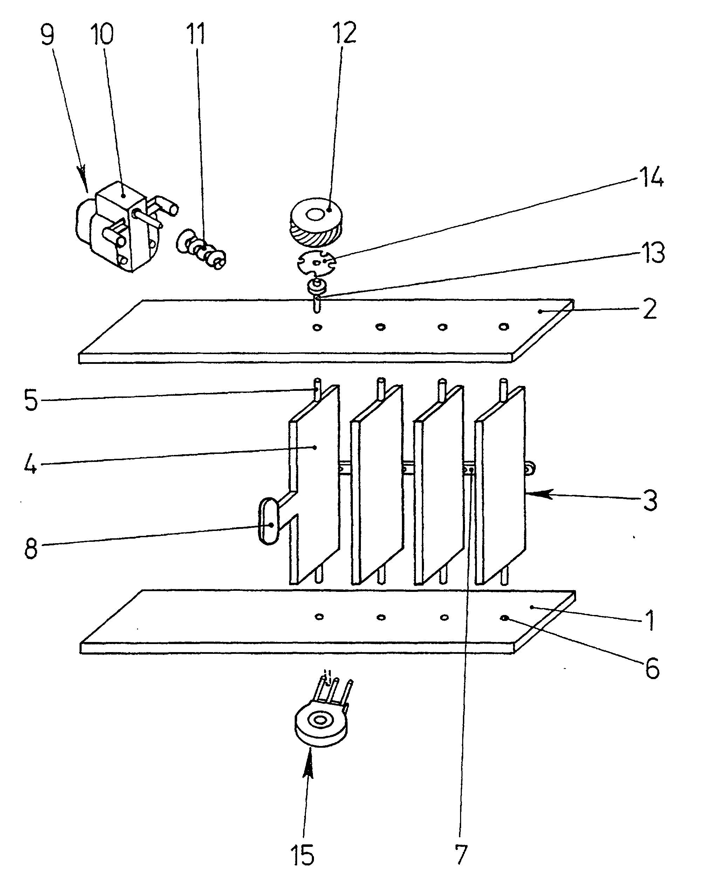

Die Zeichnung zeigt zwischen zwei Trägerplatten 1, 2 eine Lüfterjalousie 3, welche aus vier einzelnen Lüfterklappen 4 gebildet ist, die jeweils durch eine vertikal verlaufende Welle 5 in Bohrungen 6 der Trägerplatten 1, 2 gehalten sind. Eine Koppelstange 7 verbindet die einzelnen Lüfterklappen 4 miteinander, so daß sie sich stets synchron zueinander bewegen. Die Lüfterjalousie 3 ist in ein hier nicht weiter dargestelltes Cockpit eines Kraftfahrzeugs eingebaut.

Zur manuellen Verstellung der Lüfterklappen dient ein Handhebel 8, der an einer der Lüfterklappen 4 befestigt ist und mit dem man diese unmittelbar verschwenken kann. Zusätzlich ist ein elektromotorischer Antrieb 9 vorgesehen. Dieser hat einen Getriebemotor 10, der über eine Schnecke 11 ein Schneckenrad 12 anzutreiben vermag. Das Schneckenrad 12 sitzt auf einer auf der Welle 5 drehfest aufzusetzenden Wellenverlängerung 13 und vermag über eine Rutschkupplung 14 die Wellenverlängerung 13 und damit die Welle 5 anzutreiben. Aufgrund der Rutschkupplung 14 kann man von Hand die Lüfterklappe 4 verstellen, ohne daß sich das Schnekkenrad 12 und damit auch der Antrieb 9 drehen muß. Allerdings geht durch eine manuelle Verstellung die Kopplung zwischen der Welle 5 und dem Antrieb 9 verloren. Deshalb ist für eine automatische Regelung und Verstellung eine Positionserkennung 15 vorgesehen, die aus einem üblichen Potentiometer oder einem Hallelement bestehen kann, in das das untere Ende der Welle 5 eingreift und welches auf diese Weise die jeweilige Position der Lüfterklappe 4 zu erfassen vermag.

## Patentansprüche

1. Lüfterklappe (4) für ein Kraftfahrzeug, insbesondere für ein Cockpit eines Kraftfahrzeugs, welche mittels eines Handhebels (8) verstellbar ausgebildet ist, wobei die Lüfterklappe (4) zum Verstellen zusätzlich einen elektromotorischen Antrieb (9) hat, welcher über eine Rutschkupplung (14) mit der Lüfterklappe (4) getrieblich verbunden ist, **dadurch gekennzeichnet, daß** die Lüfterklappe (4) mit einer Positionserkennung (15) versehen ist.

2. Lüfterklappe nach Anspruch 1, **dadurch gekennzeichnet, daß** der Antrieb (9) einen Getriebemotor (10) hat, der getrieblich mit einer Schnecke (11) verbunden ist, welche in ein auf einer Welle (5) der Lüfterklappe (4) angeordnetes Schneckenrad (12) eingreift, und daß das Schneckenrad (12) durch die Rutschkupplung (14) mit der Welle (5) verbunden ist.

3. Lüfterklappe nach einem der Ansprüche 1 oder 2, **dadurch gekennzeichnet, daß** die Positionserkennung (15) durch ein Potentiometer gebildet ist, in welches die Welle (5) der Lüfterklappe (4) führt.

4. Lüfterklappe nach einem der Ansprüche 1 oder 2, **dadurch gekennzeichnet, daß** die Positionserkennung (15) durch ein Hallelement gebildet ist.

5. Lüfterklappe nach einem der vorangehenden Ansprüche, **dadurch gekennzeichnet, daß** sie Teil einer Lüfterjalousie (3) ist.

6. Lüfterklappe nach Anspruch 5, **dadurch gekennzeichnet, daß** der elektromotorische Antrieb (9) an einer Einzelklappe vorgesehen ist und die Einzelklappen der Lüfterjalousie (3) durch eine Koppelstange (7) miteinander Verbindung haben.

## Claims

1. Ventilator flap (4) for a motor vehicle, in particular for a cockpit of a motor vehicle, which is designed such that it can be adjusted by means of a hand lever (8), the ventilator flap (4) additionally having, for adjustment purposes, an electric motor drive (9) which is connected in terms of transmission via a slip coupling (14) to the ventilator flap (4), **characterized in that** the ventilator flap (4) is provided with a position-identifying means (15).

2. Ventilator flap according to Claim 1, **characterized in that** the drive (9) has a gear motor (10) which is connected in terms of transmission to a worm (11) which engages in a worm wheel (12) arranged on a shaft (5) of the ventilator flap (4), and **in that** the worm wheel (12) is connected to the shaft (5) by the slip coupling (14).

3. Ventilator flap according to either of Claims 1 and 2, **characterized in that** the position-identifying means (15) is formed by a potentiometer into which the shaft (5) of the ventilator flap (4) leads.

4. Ventilator flap according to either of Claims 1 and 2, **characterized in that** the position-identifying means (15) is formed by a Hall element.

5. Ventilator flap according to one of the preceding claims, **characterized in that** it is part of a ventilator louvre (3).

6. Ventilator flap according to Claim 5, **characterized in that** the electric motor drive (9) is provided on one individual flap and the individual flaps of the ventilator louvre (3) are connected to one another by a coupling rod (7).

## Revendications

1. Volet d'aération (4) pour un véhicule automobile, en particulier pour un habitacle d'un véhicule automobile, qui est réalisé réglable en position au moyen d'une manette (8), le volet d'aération (4) possédant, en plus, pour son positionnement, un entraînement (9) par moteur électrique, relié, pour son fonctionnement, au volet d'aération (4) par un accouplement à friction (14),
**caractérisé en ce que** le volet d'aération (4) est muni d'un dispositif de détection de position (15).

2. Volet d'aération suivant la revendication 1, **caractérisé en ce que** l'entraînement (9) comporte un motoréducteur (10), relié, pour son fonctionnement, à une vis sans fin (11), qui attaque une roue à denture hélicoïdale (12) disposée sur un arbre (5) du volet d'aération (4), et **en ce que** la roue à denture hélicoïdale (12) est reliée à l'arbre (5) par l'accouplement à friction (14)

3. Volet d'aération suivant l'une des revendication 1 ou 2, **caractérisé en ce que** le dispositif de détection de position (15) est formé par un potentiomètre, couplé à l'arbre (5) du volet d'aération (4).

4. Volet d'aération suivant l'une des revendications 1 ou 2, **caractérisé en ce que** le dispositif de détection de position (15) est réalisé par un élément à effet Hall.

5. Volet d'aération suivant l'une des revendications précédentes, **caractérisé en ce qu'**il est une partie d'un store à lamelles (jalousie) (3) d'aération.

6. Volet d'aération suivant la revendication 5, **caractérisé en ce que** l'entraînement par moteur électrique (9) est prévu sur un volet individuel et que les volets individuels du store d'aération (3) sont reliés entre eux par une tige d'accouplement (7).
